# EUROPEAN PATENT SPECIFICATION

(11) **EP 0 927 228 B1**
(45) Date of publication and mention of the grant of the patent: **19.11.2003**
(21) Application number: 97943301.8
(22) Date of filing: 17.09.1997
(51) Int. Cl.: C08L 59/00, H01B 1/24

(54) **ANTI-STATIC COMPOSITION**
ANTISTATISCHE ZUSAMMENSETZUNG
COMPOSITION ANTISTATIQUE

(30) Priority: 18.09.1996 US 26579 P; 17.07.1997 US 52858 P; 16.09.1997 US 933195
(43) Date of publication of application: 07.07.1999
(73) Proprietor: E.I. DU PONT DE NEMOURS AND COMPANY, Wilmington Delaware 19898 (US)
(72) Inventor: KOPPEN, Johannes, Evert, Aloisius, NL-2954 AC Alblasserdam (NL)
(74) Representative: Carpmaels & Ransford
(86) International application number: US9716112
(87) International publication number: WO98012259

(56) References cited:
- EP-A- 0 453 218
- JP-A- 60 028 063
- JP-A- 63 278 968
- SU-A- 1 685 961
- Dialog Information Services, file 347, JPO & JAPIO, Dialog accession no. 03363826, Tomono Shigeki et al: "Carbon Short Fiber Aggregate and Fiber- Reinforced Thermoplastic Resin Composition Using Same", Section: C, Section No. 823, Vol. 15, No. 145, Pg. 120, April 12, 1991 (199110412)

## Description

### BACKGROUND OF THE INVENTION

### Field of the Invention:

The invention relates to an anti-static composition, and to moulded articles comprising anti-static compositions, such as mechanical components.

### Description of Prior Art:

It is known to use electroconductive carbon black in anti-static resin compositions comprising polyoxymethylene (POM) and an epoxy resin compound. Such compositions preferably comprise also an additive for curing the epoxy resin.

It is furthermore known to use carbon fiber for manufacturing an electroconductive composition having a relatively high tensile strength by mixing a carbon fiber with a specific surface layer together with any one of a wide range of thermoplastic resins, including polyoxymethylene.

Significant disadvantages of such known compositions are their less than optimal processability and resulting electrical-, mechanical- and/or thermal properties. For example, the use of carbon black in polyoxymethylene - containing compositions results in less favorable thermal conductivity compared with virgin resin, in particular since relatively large amounts of carbon black have to be used to obtain the desired electroconductivity. Epoxy resins are not reacting in a favourable manner when extrusion of the compositions is envisaged, which is an efficient method of obtaining homogenous compositions comprising POM resins.

Moreover, although the addition of carbon fiber is known to increase the tensile strength of a resin composition, the processability of compositions containing substantial amounts (e.g. 15 - 20 % by weight or more) of carbon fiber in order to make an inherent insulator such as POM resin electroconductive, is not very good, in particular when moulding applications are envisaged.

It would be of substantial interest to manufacturers of anti-static compositions and electrical- or mechanical components made therefrom, if resin compositions would be available which possess both excellent electrical- and mechanical properties and can be processed in equipment normally used therefor.

JP 63-278968 discloses a resin composition comprising a thermoplastic resin, 20 wt % or below of a carbon fiber and 5 wt% or above of a polytetrafluoroethylene resin powder.

Surprisingly, it has now been found that anti-static compositions with such desired properties can be obtained by combining a relatively small fraction of carbon fiber with a polyoxymethylene polymer.

### SUMMARY OF THE INVENTION

The present invention relates to an anti-static composition comprising:
(a) 65-99% by weight of a polyoxymethylene polymer;
(b) 0.5-10% by weight of carbon fiber and, optionally
(c) 0.1-10% by weight of hydroxyl-containing polyolefins.

The invention further relates to the use of a composition comprising
(a) 65-99% by weight of a polyoxymethylene polymer
(b) 0.5-10% by weight of carbon fiber, and
(c) 0.1-10% by weight of a lubricating compound as an additive compound, said lubricating compound is selected from (i) hydroxyl-containing polyolefins; and (ii) fluoro-containing polymers,
as an anti-static composition.

### DETAILED DESCRIPTION

The combination of conductive materials and inherently insulating resins in order to change the electrical properties of such resins has been known for a long time. Unfortunately, optimization of a specific (electrical) property usually results in degradation of other properties (mechanical, processing, etc.) of the resulting resin composition. In view of the large member of variables in chemical composition manufacture and behaviour of resin compositions, even when the major resin component is selected to be POM, it is not feasible for a person skilled in the art to optimize an anti-static resin composition using all those variables. Surprisingly, the results of the use of a relatively low fraction of carbon fiber can be further improved when also a relatively low fraction of a lubricating compound is added, resulting in an anti-static composition which comprises 0.1 - 10% by weight of a lubricating compound as an additive compound (c). Such a lubricating compound substantially increases the processability of otherwise difficult to combine compounds, to wit POM and carbon fiber; even for relatively small amounts of carbon fiber such as in compositions according to the present invention.

The lubricating compound is selected from hydroxyl-containing polyolefins, in particular polyethyleneglycol and organic fluoro-containing polymer, in particular a homo- or co-polymer of a fluoro-substituted olefin. A particularly preferred lubricating compound for the present purpose is polytetrafluoroethylene.

Stearate compounds such as calcium stearate and zinc stearate are preferably not used as lubricants in the compositions of this invention, as they have been found to degrade the POM component.

The amount of lubricating compound in the present anti-static composition should be sufficient to increase the compatibility of the other compounds in the composition and attain optimal dispersion of the compounds, in this case 0.1% by weight, although in some compositions a higher minimum amount is preferred, such as 1 % by weight, in particular when the amount of carbon fiber is relatively high. On the other hand, the amount of lubricating compound should not exceed a value at which some aspects of processability of the resulting composition become unfavorable, such as deposit formation in moulds or physical properties of the composition; the upper limit is thereto 10 %. Preferably, the amount of lubricating compounds is not more than 5 % by weight, in order to avoid mould depositions and decreases in thermal- and/or mechanical properties of the anti-static compositions, while retaining excellent processability and dispersion of the various compounds.

The polyoxymethylene polymer component used herein includes homopolymers of formaldehyde or of cyclic oligomers of formaldehyde, the terminal groups of which are end-capped by esterification or etherification, copolymers of formaldehyde or of cyclic oligomers of formaldehyde and other monomers that yield oxyalkylene groups with at least two adjacent carbon atoms in the main chain, the terminal groups of which copolymers can be hydroxyl terminated or can be end-capped by esterification or etherification, or a mixture of such homopolymers and copolymers. End-capping is generally done to prevent the polyoxymethylene from "unzipping" as it tends to do at elevated temperatures. Polyoxymethylene copolymers contain at least one comonomer. Comonomers commonly used in preparing polyoxymethylene copolymers include alkylene oxides of 2-12 carbon atoms and their cyclic addition products with formaldehyde. The quantity of comonomer is generally not more than about 20 weight percent, preferably not more than about 15 weight percent, and most preferably about 2 weight percent. The most preferred comonomer is ethylene oxide. The preferred polyoxymethylene homopolymers include those whose terminal hydroxyl groups have been end-capped by a chemical reaction to form ester or ether groups, preferably acetate or methoxy groups, respectively.

The polyoxymethylene used in the compositions described herein may be branched or linear. It generally has a number of average molecular weight in the range of about 10,000 to 100,000, preferably about 20,000 to 75,000. These polyoxymethylene molecular weights are generally preferred in order to provide an optimum balance of good mixing of the various ingredients to be melt blended into the composition with the most desired combination of physical properties in the molded articles made from the such compositions; however, polyoxymethylene polymers having higher or lower molecular weight averages may be used, depending on the physical and processing properties desired. The molecular weight of the polyacetal may conveniently be measured by gel permeation chromatography in m-cresol at 160°C using a DuPont PSM bimodal column kit with nominal pore size of 60 and 1,000 angstroms.

Polyoxymethylene (POM) homopolymers refers to a known class of compounds including homopolymers of formaldehyde, the terminal groups of which are end-capped by esterification. The POM homopolymer is linear and preferably has a number average molecular weight in the range of 10,000 to 80,000. The molecular weight of the POM can be conveniently measured by gel permeation chromatography in hexafluorisopropanol at about 30°C using a DuPont PSM bimodal column kit with nominal pore size of 60 to 1000 A.

If the molecular weight of the POM homopolymer is either too high or too low, it is difficult to work with and to disperse within it the carbon fibers and additives, as will be understood by the skilled artisan. Especially suitable POMs are sold under the name DELRIN® acetal resin, manufactured by E. I. du Pont de Nemours and Company of Wilmington, Delaware, and described in brochure No. H-51416 entitled "DELRIN® Product Guide and Properties" available from DuPont.

The amount of carbon fiber in the anti-static composition according to the invention should not be substantially below 1 % by weight because the resulting composition would not have a sufficiently low volume resistivity. The volume resistivity (determined in accordance with British Standard BS 2782: Part 2: Method 230 A: 1982) of the present compositions should preferably be from 10 to 10⁸ Ohm•m (which corresponds with a range from 10³ to 10¹⁰ Ohm•cm), and in particular from 10² to 10⁷ Ohm•m. If the volume resistivity is substantially above 10⁸ Ohm•m, then the composition does not show sufficient anti-static properties anymore and becomes an insulator, whereas if the volume resistivity is substantially below 10, the composition becomes an electrical conductor, which is not the purpose of the compositions according to the present invention.

Another reason why the amount of carbon fiber should not be substantially below 1 % by weight is the following: during the process of moulding or extruding the composition into a desired shape, fragments of the composition remain which can either be discarded or reused. If they are reused, the fragments are normally ground into smaller pieces prior to their remoulding or reextruding. Grinding of the pieces tends to lower their conductivity.

An amount of substantially more than 10 % by weight of carbon fiber in the composition results in entirely different electrical-, mechanical and processing properties from those envisaged i.e. the composition becomes electrically conductive, is difficult to use in moulding- and extrusion processes and shows unattractive elongation (too low) and elastic modulus (too high) properties.

It is also possible to use polyoxymethylene copolymers by copolymerizing formaldehyde and other copolymerizable aldehydes, provided that the number average molecular weight of the resulting copolymers is substantially similar to that of the POM homopolymer described hereinbefore.

Suitable carbon fibers for the composition according to the invention have a cut length from 0.1 mm to 20 mm, and preferably from 1 - 10 mm. The filament diameter is suitably from 1 - 20 µm and preferably from 3 - 10 µm.

If the cut length of the carbon fibers is too long (substantially above 20 mm) then the resulting composition will in many cases become difficult to process by means of extrusion or moulding; when the cut length is too short (substantially below 0.1 mm), then the effect on the electroconductivity and/or mechanical strength of the resulting composition will be insufficient for the present purpose. A similar reasoning applies to the desired diameter of the carbon fiber.

In many embodiments of the present invention it is preferred that the anti-static composition is substantially phosphor-free, although phosphor contents of up to 20 parts per million by weight (ppmw) can be tolerated without a material adverse effect on the resulting properties of the composition. Larger amounts of phosphor should in particular be avoided when a POM having terminal groups which are end-capped by esterification is used, because phosphor compounds have a negative effect on the thermal stability of compositions comprising such POM.

In order to improve the toughness of the compositions according to the invention, additive compound (c) may comprise some elastomer, preferably a polyurethane elastomer and in particular 1 - 10 % by weight thereof. When substantially more than 10 % by weight of elastomer is present in the composition, some mechanical properties thereof such as elongation and stiffness are negatively affected for some applications. However, if substantially less than 1 % by weight of elastomer is used, the effect on the toughness is negligible.

Heat stabilizing agents, as their name implies, serve to stabilize the compositions of this invention at elevated temperatures, e.g. moulding temperatures, extruding temperatures and the like. Preferably such agents are polyacrylamides and ethylene vinyl alcohol (EVOH). A preferred polyacrylamide will have a small particle size and be non-melting, such as those stabilizers disclosed in U.S. Patent No. 5,011,890, and is preferably present in the composition of this invention in a weight range of 0.05 to 1.0 % by weight, more preferably 0.20 to 0.50 % by weight.

Anti-oxidants serve to prevent oxidative degradation in polymers. Suitable anti-oxidants are sterically hindered phenols and include tetrakis[methylene(3,5-di-tert-butyl-4-hydroxy-hydrocinnamate)]methane (supplied by Ciba-Geigy as IRGANOX 1010 RTM) and triethyleneglycol bis[3-(3'-tert-butyl-4'-hydroxy-5'-methylphenyl)propionate] (supplied by Ciba-Geigy as IRGANOX 245 RTM). The anti-oxidant is preferably present in the composition in an amount ranging from 0.05 to 0.20 % by weight.

Suitably, the presently claimed compositions comprise coloring agents which may be present e.g. in a low density polyethylene matrix. The coloring agent, including carbon black is preferably present in the composition in relatively small amounts ranging from 0.1 to 1.0 % by weight.

The invention further relates to moulded articles comprising an anti-static composition as described hereinbefore and to electronic- and mechanical components comprising such a moulded article.

A wide range of applications can be envisaged for the present anti-static compositions, including its use in conveyor belt systems and parts thereof, automotive applications such as fuel systems and parts thereof, in particular fuel filler top end assemblies (including fuel filler-necks and -pockets) and gears and other parts for audio- and video equipment.

The following Examples, do not form part of the invention but represent background art useful for understanding the invention.

| Example No. | Carbon Fiber (% by wt.) | Volume Resistivity (Ohm•m) | Elastic Modulus (GPa) | Elongation at Break (%) |
|---|---|---|---|---|
| 1 | 0 | 1.6x10¹³ | 2.95 | 37.90 |
| 2. | 5 | 1.5x10³ | 5.35 | 11.70 |
| 3 | 10 | <35 | 8.10 | 5.60 |
| 4 | 18 | <5 | 10.75 | 0.60 |

A two-step process is applied to prepare the compositions tested in Example Nos. 2 and 3, wherein the first step comprises the preparation of a concentrate composition comprising 82 % by weight of a polyoxymethylene homopolymer, the terminal groups of which are end-capped by esterification, and having a number average molecular weight of about 60,000 and 18 % by weight of carbon fibers having an average length of about 6 mm and an average diameter of 7 µm using a single screw extrusion process. In the second step the concentrate composition obtained in the first step is compounded in a single screw extrusion process with a similar polyoxymethylene as described hereinabove which does not contain carbon fiber.

The composition tested in Example 1 (comparative Example, not according to the present invention) comprises a similar POM without carbon fiber as used in step 2 of the process for the preparation of the compositions for Examples 2 and 3.

The composition tested in Example 4 (comparative Example, not according to the present invention) comprises a similar POM as prepared in step 2 of the aforementioned process.

The Volume Resistivity is measured in accordance with British Standard BS 2782: Part 2: Method 230 A: 1982.

The Elasticity Modulus, expressed in Giga Pascal (GPa) is measured in accordance with standard ISO 527.

The Elongation at Break, expressed as a percentage, is measured in accordance with standard ISO 527.

## Claims

1. An anti-static composition comprising:
(a) 65-99% by weight of a polyoxymethylene polymer;
(b) between 0.5-10% by weight carbon fiber; and
(c) 0.1-10% by weight of hydroxyl-containing polyolefins.

2. Use of a composition comprising:
(a) 65-99% by weight of a polyoxymethylene polymer;
(b) between 0.5-10% by weight carbon fiber; and
(c) 0.1-10% by weight of a lubricating compound as an additive compound, said lubricating compound is selected from (i) hydroxyl-containing polyolefins; and (ii) fluoro-containing polymers
as an anti-static composition.

3. Moulded article comprising an anti-static composition according to claim 1.

4. Composition according to claim 1 which is phosphor-free.

5. Composition according to claim 1 or claim 4 which comprises carbon fibers having a length from 0.1 mm to 20 mm.

6. Anti-static composition according to any one of claims 1, 4 and 5 wherein the composition has a volume resistivity of 10¹ to 10⁸ Ohm•m determined in accordance with British Standard BS 2782:Part 2:Method 230 A: 1982.

## Patentansprüche

1. Antistatische Zusammensetzung, umfassend :
(a) 65-99 Gew.% eines Polyoxymethylenpolymeren,
(b) zwischen 0,5 -10 Gew.% Kohlenstoff-Faser und
(c) 0,1-10 Gew.% Hydroxyl enthaltende Polyolefine.

2. Verwendung einer Zusammensetzung, umfassend:
(a) 65-99 Gew.% eines Polyoxymethylenpolymeren,
(b) zwischen 0,5 -10 Gew.% Kohlenstoff-Faser und
(c) 0,1 -10 Gew.% einer Gleitverbindung als eine Additivverbindung, wobei die Gleitverbindung ausgewählt ist aus (i) Hydroxyl-enthaltenden Polyolefinen und (ii) Fluor enthaltenden Polymeren, als eine antistatische Zusammensetzung.

3. Geformter Gegenstand, umfassend eine antistatische Zusammensetzung nach Anspruch 1.

4. Zusammensetzung nach Anspruch 1, die Phosphor-frei ist.

5. Zusammensetzung nach Anspruch 1 oder Anspruch 4, die Kohlenstoff-Fasern mit einer Länge von 0,1 mm bis 20 mm umfaßt.

6. Antistatische Zusammensetzung nach einem von Ansprüchen 1, 4 und 5, wobei die Zusammensetzung einen spezifischen Volumenwiderstand von 10¹ bis 10⁸ Ohm•m, bestimmt in Übereinstimmung mit British Standard BS 2782:Part2:Method 230 A:1982 hat.

## Revendications

1. Une composition anti-statique comprenant:
(a) 65-99% en poids d'un polymère de polyoxyméthylène;
(b) entre 0,5-10% en poids de fibre de carbone; et
(c) 0,1-10% en poids de polyoléfines contenant le groupe hydroxyle.

2. Utilisation d'une composition comprenant:
(a) 65-99% en poids d'un polymère de polyoxyméthylène;
(b) entre 0,5-10% en poids de fibre de carbone; et
(c) 0,1-10% en poids d'un composé lubrifiant utilisé comme composé additif, ledit composé lubrifiant est sélectionné parmi (i) les polyoléfines contenant le groupe hydroxyle; et (ii) les polymères contenant du fluor.
comme composition anti-statique.

3. Article moulé comprenant une composition anti-statique selon la revendication 1.

4. Composition selon la revendication 1 qui ne contient pas de phosphore.

5. Composition selon la revendication 1 ou la revendication 4 qui comprend des fibres de carbone possédant une longueur de 0,1 mm à 20 mm.

6. Composition anti-statique selon une quelconque des revendications 1, 4 et 5 dans laquelle la composition possède une résistivité volumique de 10¹ à 10⁸ Ohm•m déterminée en conformité avec le Standard Britannique BS 2782:Part2:Method 230 A:1982.
